# EUROPÄISCHE PATENTSCHRIFT

(11) **EP 1 624 183 B1**
(45) Veröffentlichungstag und Bekanntmachung des Hinweises auf die Patenterteilung: **11.02.2009**
(21) Anmeldenummer: 04018343.6
(22) Anmeldetag: 03.08.2004
(51) Int. Cl.: F02M 55/00, F16L 41/12

(54) **Rohranschlusseinrichtung**
Duct connection arrangement
Raccordement de conduit

(43) Veröffentlichungstag der Anmeldung: 08.02.2006
(73) Patentinhaber: TI Automotive (Heidelberg) GmbH, 69123 Heidelberg (DE)
(72) Erfinder: Sausner, Andreas, 60389 Frankfurt (DE); Fiedler, Uwe, 68766 Hockenheim (DE); Schuhmacher, Rainer, 69214 Eppelheim (DE); Zahn, Ralf, 68799 Reilingen (DE)
(74) Vertreter: Rohmann, Michael

(56) Entgegenhaltungen:
- DE-A- 19 927 145
- FR-A- 2 760 490
- US-A- 5 172 939
- US-A- 5 924 747

## Beschreibung

Die Erfindung betrifft eine Rohranschlusseinrichtung für den Anschluss von Rohrleitungen, insbesondere von Kraftfahrzeugrohrleitungen, wobei eine Rohrleitung an zumindest einem Ende ein Stirnelement aufweist, welches Stirnelement mit einer stirnseitigen Dichtfläche ausgestattet ist und wobei ein die Rohrleitung umgebender Fitting vorgesehen ist, welcher Fitting das Stirnelement im montierten Zustand mit seiner stirnseitigen Dichtfläche an eine Anschlussfläche eines Anschlusselementes andrückt bzw. anpresst.

Eine Rohranschlusseinrichtung der vorstehend beschriebenen Art ist aus der Praxis z.B. FR 2 760 490, bekannt. Bei dieser Rohranschlusseinrichtung ist das Anschlusselement als Anschlussblock ausgebildet, der eine Sackbohrung aufweist, in welche Sackbohrung der mit einem Außengewinde versehene Fitting mit dem aufgenommenen Rohrleitungsende einschraubbar ist. Das Stirnelement des Rohrleitungsendes ist dabei in der Regel als Bördel ausgebildet und dieser Bördel wird durch das Einschrauben des Fittings mit seiner stirnseitigen Dichtfläche an die Anschlussfläche des Anschlussblockes gedrückt. Der Fitting hinterfasst dabei den Bördel bzw. beaufschlagt den Bördel unmittelbar. Damit hier eine funktionssichere Verbindung gewährleistet ist, sind unter allen Betriebsbedingungen ausreichend hohe Klemmkräfte erforderlich. Aufgrund der verschiedenen Materialkombinationen treten an der Kontaktstelle zwischen Fitting und Rückseite des Bördels einerseits und an der Kontaktstelle zwischen der Dichtfläche des Bördels und der Anschlussfläche andererseits unterschiedliche Reibbeiwerte auf. In der Regel ist der Reibbeiwert des Kontaktes zwischen Fitting und Bördelrückseite höher als der Reibbeiwert des Kontaktes zwischen der Dichtfläche des Bördels und der Anschlussfläche. Beim Verschrauben des Fittings kann es zu einem Mitdrehen der Rohrleitung kommen und durch eine Torsion der Rohrleitung wird Federarbeit gleichsam in der Rohrleitung gespeichert. Diese Torsion der Rohrleitung erzeugt ein unerwünschtes Rückdrehmoment, das zu einem unkontrollierten Lösen der Verbindung führen kann. Es versteht sich, dass man versucht, dieses Lösen der Schraubverbindung aufgrund einer Torsion der Rohrleitung möglichst zu vermeiden. Die aus der Praxis bekannte Rohranschlusseinrichtung zeichnet sich aber noch durch einen weiteren Nachteil aus. Um hier ein Vertauschen von Rohrleitungen bzw. einen Anschluss einer falschen Rohrleitung an einem Anschlusselement zu vermeiden, werden Gewinde (von Fitting und Sackloch) mit unterschiedlicher Größe eingesetzt. Eine solche Verwendung von Bauelementen mit unterschiedlichen Gewinden ist im Hinblick auf die Herstellung und Lagerung aufwändig und kostspielig. - Fernerhin kann es bei den bekannten Rohranschlusseinrichtungen leicht zu unerwünschten Korrosionen kommen. Das ist darauf zurückzuführen, dass durch den Spalt zwischen Fitting und Rohrleitungsende Elektrolyte eintreten können und quasi alle Komponenten der Anschlusseinrichtung erreichen können. Aufgrund der unterschiedlichen metallischen Komponenten kommt es dann leicht zu Korrosionserscheinungen.

Demgegenüber liegt der Erfindung das technische Problem zu Grunde, eine Rohranschlusseinrichtung der eingangs genannten Art anzugeben, bei der die vorstehend aufgezeigten Nachteile effektiv vermieden werden können.

Zur Lösung dieses teschnischen Problems lehrt die Erfindung eine Rohranschlusseinrichtung gemäß Anspruch 1.

Es liegt im Rahmen der Erfindung, dass zwischen der Dichtfläche des Stirnelementes und der Anschlussfläche des Anschlusselementes ein unmittelbarer Kontakt besteht. Die Dichtfläche ist vorzugsweise konusförmig ausgebildet und zweckmäßigerweise ist dann die Anschlussfläche entsprechend komplementär konusförmig ausgebildet.

Bei dem separaten Druckelement handelt es sich um ein ringförmiges Element, das das Rohrleitungsende vollständig umgibt. Es liegt im Rahmen der Erfindung, dass das Druckelement im montierten Zustand der Rohranschlusseinrichtung an der Außenfläche des Rohrleitungsendes anliegt und an der Rückseite des Stirnelementes bzw. an der Bördelrückseite anliegt.

Die Einstellung der Reibbeiwerte kann durch entsprechende Materialauswahl für die Komponenten bzw. für ihre Oberflächen erfolgen. Die Einstellung der Reibbeiwerte lässt sich auch durch entsprechende Gestaltung der Oberflächen, insbesondere durch Auswahl bestimmter Rauhigkeiten und/oder Profilierungen verwirklichen.

Es liegt im Rahmen der Erfindung, dass der Fitting ein Schraubfitting ist und dass beim Herstellen einer Schraubverbindung des Fittings die Stirnseite des Fittings über das Druckelement auf das Stirnelement der Rohrleitung einwirkt. Auf diese Weise wird die Dichtfläche des Stirnelementes an die Anschlussfläche des Anschlusselementes angepresst. Es liegt fernerhin im Rahmen der Erfindung, dass der Fitting ein Außengewinde aufweist und in ein Sackloch bzw. in eine Sackbohrung des Anschlusselementes mit komplementärem Innengewinde einschraubbar ist. Am unteren Ende der Sackbohrung befindet sich dann zweckmäßigerweise die Anschlussfläche. Im vollständig eingeschraubten Zustand des Fittings wird die Dichtfläche an die Anschlussfläche angepresst. Bei dem Anschlusselement handelt es sich vorzugsweise um einen Anschlussblock, in den eine zweite Rohrleitung integriert ist, die an die Anschlussfläche anschließt. Mit anderen Worten bildet diese Anschlussfläche dann das Ende der in das Anschlusselement integrierten zweiten Rohrleitung.

Der Erfindung liegt die Erkenntnis zu Grunde, dass durch Einfügen eines erfindungsgemäßen Druckelementes eine unerwünschte Torsion der Rohrleitung und ein damit verbundenes nachteilhaftes Rückdrehmoment wirksam reduziert bzw. vermieden werden kann. Das gelingt insbesondere durch gezielte Einstellung der Reibbeiwerte der Kontakte zwischen Fitting und Druckelement, zwischen Druckelement und Stirnelement und zwischen Stirnelement bzw. Dichtfläche und Anschlussfläche. Mit den erfindungsgemäßen Maßnahmen kann das auf die Rohrleitung einwirkende Drehmoment wirksam reduziert werden. Eine Torsion der Rohrleitung, die ein unerwünschtes Rückdrehmoment erzeugt und zum Lösen der Schraubverbindung führen kann, wird effektiv reduziert bzw. vollständig vermieden. Die erfindungsgemäßen Maßnahmen haben sich vor allem bei Kraftfahrzeugkomponenten bzw. Kraftfahrzeugrohrleitungen bewährt. Dabei handelt es sich insbesondere um Kraftstoffleitungen oder um Leitungen für Bremsflüssigkeit. Diese Rohrleitungen in Kraftfahrzeugen sind ganz speziellen Belastungen ausgesetzt und haben ganz spezielle Anforderungen zu erfüllen.

Nach besonders bevorzugter Ausführungsform, der im Rahmen der Erfindung ganz besondere Bedeutung zukommt, ist die axiale Länge des Druckelementes nach Maßgabe der axialen Länge der Sackbohrung ausgebildet. Axiale Länge bezieht sich hier auf die Länge des Druckelementes bzw. die Länge der Sackbohrung in Längsrichtung bzw. in Axialrichtung der Rohrleitung. Es liegt im Rahmen der Erfindung, dass die axiale Länge eines einer Sackbohrung zugeordneten Druckelementes direkt proportional zu der axialen Länge der Sackbohrung ist. Je größer also die Länge der Sackbohrung ist, um so größer ist auch die axiale Länge des dieser Sackbohrung zugeordneten Druckelementes.

Es liegt weiterhin im Rahmen der Erfindung, dass für verschiedene axiale Längen der Sackbohrung auch verschieden lange Druckelemente bei gleicher axialer Länge der zugeordneten Fittings vorgesehen sind. Nach bevorzugter Ausführungsform der Erfindung entspricht die axiale Länge einer Sackbohrung der Summe bzw. in etwa der Summe der axialen Länge des zugeordneten Druckelementes und der axialen Länge des Schraubgewindes des zugeordneten Fittings und der axialen Länge des zugeordneten Stirnelementes. Mit anderen Worten füllen Stirnelement, Druckelement und Schraubgewinde des Fittings eine Sackbohrung vollständig aus und vorzugsweise ragt dabei kein Teil oder nur ein geringer Teil des Fittinggewindes aus der Sackbohrung heraus. Mit Hilfe dieser Ausführungsform der Erfindung können fehlerhafte Anschlüsse von Rohrleitungen vermieden werden. Wenn beispielsweise ein Fitting mit zugeordnetem Druckelement und aufgenommener Rohrleitung in ein falsches zu langes Sackloch eingesetzt wird, so resultiert eine undichte Verbindung. Auf diese Weise können fehlerhafte Anschlüsse sehr einfach erkannt werden. Mit Hilfe dieser erfindungsgemäßen Kodierung entfällt der eingangs beschriebene Aufwand, der mit Fittings und Sackbohrungen mit unterschiedlich großem Gewinde verbunden ist.

Nach der Erfindung umgibt das Druckelement die Rohrleitung zumindest über einen Teil der axialen Länge des Druckelementes formschlüssig. Nach der Erfindung wird das Druckelement formschlüssig an die Rohrleitung angepresst. Zweckmäßigerweise erfolgt dieses Anpressen des Druckelementes mit einem Endformwerkzeug über den gesamten Umfang des Druckelementes, so dass kein Spalt zwischen dem verformten Druckelement bzw. zwischen dem verformten Teil des Druckelementes und dem Rohrleitungsende verbleibt. Der Erfindung liegt insoweit die Erkenntnis zu Grunde, dass durch das formschlüssige Anpressen des Druckelementes vermieden werden kann, dass Elektrolyte über den Spalt zwischen Fitting und Rohrleitung an die übrigen metallischen Elemente der Rohranschlusseinrichtung gelangen und auf diese Weise kann eine Korrosion an diesen metallischen Elementen effektiv vermieden werden.

Nachfolgend wird die Erfindung anhand einer lediglich ein Ausführungsbeispiel darstellenden Zeichnung näher erläutert. Es zeigen in schematischer Darstellung:
- Fig. 1: eine Rohranschlusseinrichtung nach dem Stand der Technik,
- Fig. 2a: eine erfindungsgemäße Rohranschlusseinrichtung in einer ersten Ausführungsform,
- Fig. 2b: den Gegenstand gemäß Fig. 2a in einer anderen Ausführungsform und
- Fig. 3: eine bevorzugte Ausführungsform einer erfindungsgemäßen Rohranschlusseinrichtung.

Die Figuren zeigen Rohranschlusseinrichtungen für den Anschluss von Rohrleitungen, insbesondere von Kraftfahrzeugrohrleitungen 1 im Schnitt. Im Ausführungsbeispiel nach den Figuren weist eine Rohrleitung 1 an einem Ende ein Stirnelement auf, das im Ausführungsbeispiel als Bördel 2 ausgebildet ist und dass mit einer stirnseitigen Dichtfläche 3 ausgestattet ist. Der Bördel 2 ist vorzugsweise und im Ausführungsbeispiel als F-Bördel ausgestaltet. Es handelt sich um einen metallischen Bördel 2, der im Ausführungsbeispiel einstückig an das Rohrleitungsende 4 angeformt ist. Die Figuren zeigen, dass ein die Rohrleitung 1 bzw. das Rohrleitungsende 4 umgebender Fitting 5 vorgesehen ist, welcher Fitting 5 den Bördel 2 mit seiner stirnseitigen Dichtfläche 3 an eine Anschlussfläche 6 eines Anschlusselementes anpresst. Das Anschlusselement ist im Ausführungsbeispiel als Anschlussblock 7 ausgebildet, welcher Anschlussblock 7 eine an die Anschlussfläche 6 anschließende integrierte zweite Rohrleitung 8 aufweist.

Es liegt im Rahmen der Erfindung, dass der Fitting 5 ein Schraubfitting ist und dass dieser Fitting 5 ein Außengewinde 9 aufweist, und in eine Sackbohrung 10 des Anschlussblocks 7 einschraubbar ist. Diese Sackbohrung 10 weist ein zu dem Außengewinde 9 des Fittings 5 komplementäres Innengewinde 11 auf.

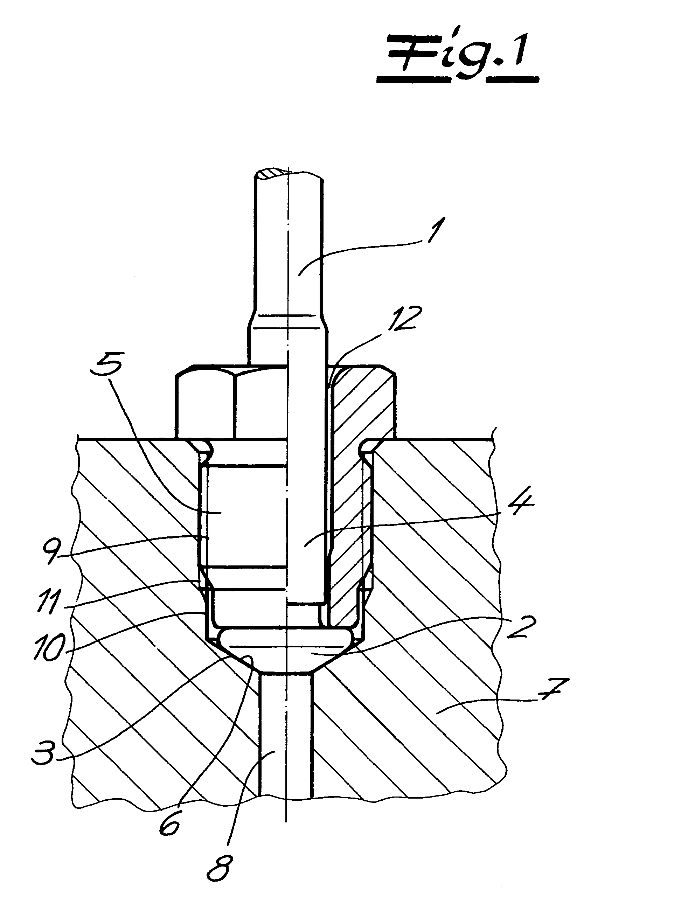

Fig. 1 zeigt eine für den Anschluss von Kraftfahrzeugrohrleitungen 1 vorgesehene Rohranschlusseinrichtung nach dem Stand der Technik. Im montierten bzw. eingeschraubten Zustand beaufschlagt hier der das Rohrleitungsende 4 aufnehmende Fitting 5 unmittelbar den Bördel 2 des Rohrleitungsendes 4 und drückt dessen Dichtfläche 3 an die Anschlussfläche 6 des Anschlussblockes 7. Beim Einschrauben des Fittings 5 kann es hier zum Verdrehen der Rohrleitung 1 bzw. des Rohrleitungsendes 4 kommen. Durch diese Torsion der Rohrleitung 1 wird Federarbeit in der Rohrleitung 1 gespeichert und es wird ein unerwünschtes Rückdrehmoment erzeugt, das später zu einem Lösen der Schraubverbindung führen kann. Im Übrigen ist bei dieser aus dem Stand der Technik bekannten Ausführungsform ein Spalt 12 zwischen Fitting 5 und Rohrleitungsende 4 erkennbar. Durch diesen Spalt 12 kann Flüssigkeit bzw. können Elektrolyte eindringen und quasi alle Komponenten der Rohrleitungsanschlusseinrichtung erreichen. Dadurch können unerwünschte Korrosionserscheinungen auftreten.

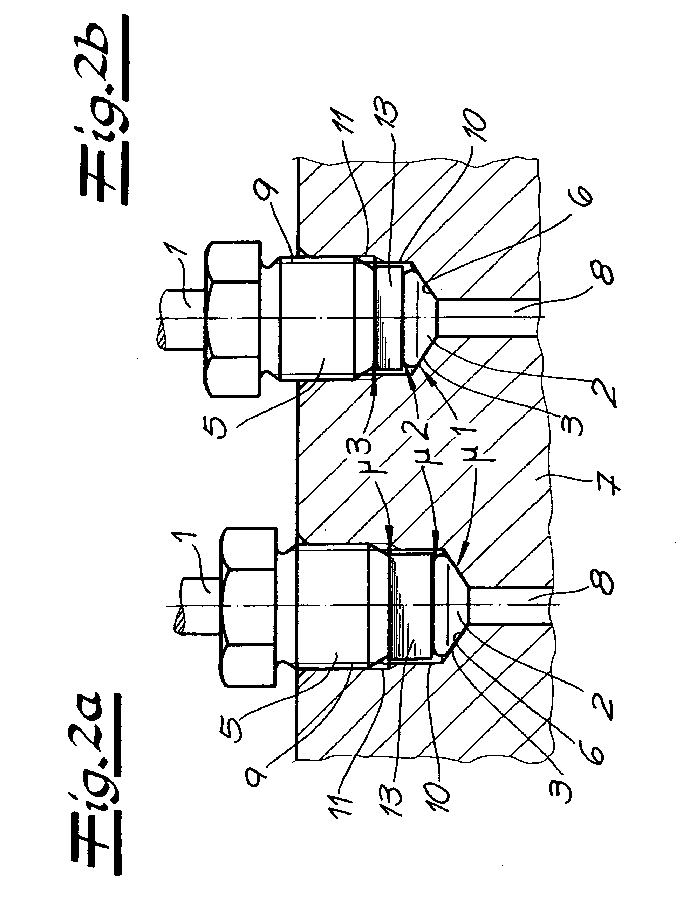

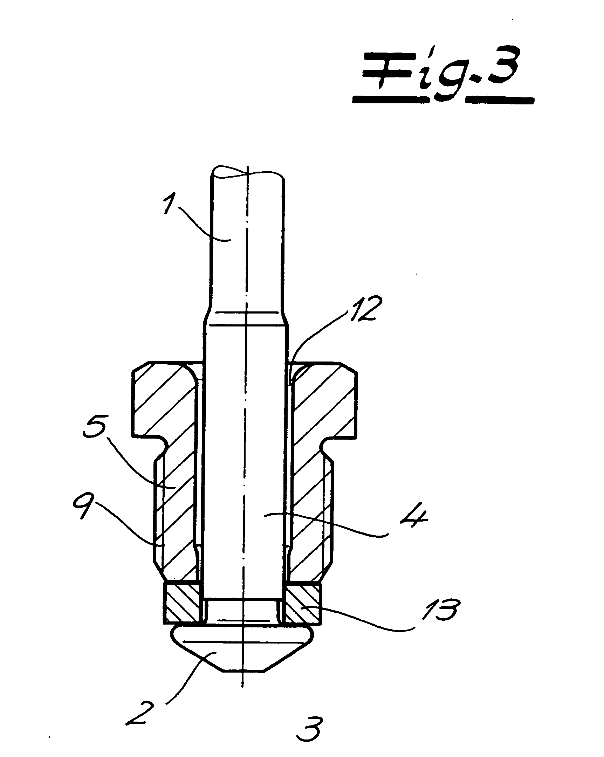

Die Fig. 2a, 2b und 3 zeigen eine erfindungsgemäße Rohranschlusseinrichtung. Hier ist zwischen Fitting 5 und Stirnelement bzw. Bördel 2 ein das Rohrleitungsende 4 umgebendes separates Druckelement 13 vorgesehen. Der Fitting 5 wirkt über dieses Druckelement 13 auf das Stirnelement bzw. auf den Bördel 2 ein und auf diese Weise wird die Dichtfläche 3 des Bördels an die Anschlussfläche 6 des Anschlussblocks 7 angepresst. Nach sehr bevorzugter Ausführungsform der Erfindung sind die Komponenten so ausgewählt bzw. eingerichtet, dass der Reibbeiwert µ1 des Kontaktes zwischen Dichtfläche 3 und Anschlussfläche 6 größer ist als der Reibbeiwert µ2 zwischen Druckelement 13 und Bördel 2 und auch größer ist als der Reibbeiwert µ3 des Kontaktes zwischen Fitting 5 und Druckelement 13 (µ1 > µ2, µ3). Auf diese Weise kann erfindungsgemäß ein unerwünschtes Verdrehen der Rohrleitung 1 bzw. des Rohrleitungsendes 4 erzielt werden.

Aus den Fig. 2a und 2b ist ersichtlich, dass nach bevorzugter Ausführungsform der Erfindung die axiale Länge des Druckelementes 13 nach Maßgabe der axialen Länge der Sackbohrung 10 ausgebildet ist. Bei größerer axialer Länge der Sackbohrung 10 (Fig. 2a) ist also auch die axiale Länge des Druckelementes 13 größer. Bei dieser bevorzugten Ausführungsform der Erfindung werden also bei verschiedenen axialen Längen der Sackbohrungen 10 verschieden axiallange Druckelemente 13 verwendet und zwar bei gleicher axialer Länge der zugeordneten Fittings 5. Dadurch kann eine weitgehend fehlerfreie Zuordnung der Fittings 5 zu den Anschlusselementen gewährleistet werden. Wenn nämlich beispielsweise der Fitting 5 aus der Fig. 2b mit dem zugeordneten kürzeren Druckelement 13 in die Sackbohrung 10 der Fig. 2a eingesetzt würde, so würde eine undichte Verbindung resultieren. Dann kann ohne weiteres erkannt werden, dass diese Verbindung nicht korrekt ist. Mit Hilfe dieser erfindungsgemäßen Kodierung der Druckelemente 13 wird vor allem vermieden, dass (wie aus dem Stand der Technik bekannt) verschiedene Fittings 5 mit verschieden großen Außengewinden 9 vorgesehen werden müssen. Das reduziert Aufwand und Kosten.

In der Fig. 3 ist eine besonders bevorzugte Ausführungsform der erfindungsgemäßen Rohranschlusseinrichtung dargestellt. Hier ist das Druckelement 13 über einen Teil seiner axialen Länge formschlüssig über den gesamten Umfang des Rohrleitungsendes 4 an das Rohleitungsende 4 angepresst. Dieser Bereich zwischen Druckelement 13 und Rohrleitungsende 4 ist also spaltfrei ausgebildet. Ein solches Anpressen des Druckelementes 13 an das Rohrleitungsende 4 wird erfindungsgemäß mit einem entsprechenden Formwerkzeug durchgeführt. Damit wird erreicht, dass durch den Spalt 12 zwischen Fitting 5 und Rohrleitungsende 4 eindringende Flüssigkeit bzw. eindringende Elektrolyten von dem Druckelement 13 gleichsam aufgehalten werden und die übrigen Komponenten der Rohranschlusseinrichtung nicht erreichen können. Auf diese Weise wird eine Korrosion der genannten Komponenten effektiv vermieden. Der Erfindung liegt in diesem Zusammenhang also die Erkenntnis zu Grunde, dass ein erfindungsgemäßes Druckelement 13 gleichzeitig als Dichtelement am Rohrleitungsende 4 eingesetzt werden kann.

## Patentansprüche

1. Rohranschlusseinrichtung für den Anschluss von Rohrleitungen (1), insbesondere von Kraftfahrzeugrohrleitungen, wobei eine Rohrleitung (1) und ein Anschlusselement mit einer Anschlussfläche (6) vorgesehen sind, wobei an zumindest einem Ende der Rohrleitung (1) ein als Bördel (2) ausgebildetes Stirnelement angeschlossen ist, welches Stirnelement mit einer stirnseitigen Dichtfläche (3) ausgestattet ist,
wobei ein die Rohrleitung (1) umgebender Fitting (5) vorgesehen ist, welcher Fitting (5) den Bördel (2) mit seiner stirnseitigen Dichtfläche (3) an der Anschlussfläche (6) des Anschlusselementes anpresst,
wobei zwischen Fitting (5) und Bördel (2) zumindest ein die Rohrleitung (1) vollständig umgebendes separates Druckelement (13) vorgesehen ist, welches an der Bördelrückseite anliegt,
wobei der Fitting (5) ein Schraubfitting ist und wobei beim Herstellen einer Schraubverbindung des Fittings (5) die Stirnseite des Fittings (5) über das Druckelement (13) auf das Stimelement der Rohrleitung (1) einwirkt,
**dadurch gekennzeichnet, daß**
der Reibbeiwert µ1 des Kontaktes zwischen Dichtfläche (3) und Anschlussfläche (6) größer ist als der Reibbeiwert µ2 des Kontaktes von Druckelement (13) und Bördel (2) und größer ist als der Reibbeiwert µ3 des Kontaktes von Fitting (5) und Druckelement (13),
das Druckelement (13) mit einem Endformwerkzeug formschlüssig an die Rohrleitung (1) angepresst ist, und
das Druckelement (13) die Rohrleitung (1) zumindest über einen Teil der axialen Länge des Druckelementes (13) formschlüssig umgibt.

2. Rohranschlusseinrichtung nach Anspruch 1, wobei der Fitting (5) ein Außengewinde (9) aufweist und in eine Sackbohrung (10) des Anschlusselementes mit komplementärem Innengewinde (11) einschraubbar ist.

3. Rohranschlusseinrichtung nach einem der Ansprüche 1 oder 2, wobei die axiale Länge des Druckelementes (13) nach Maßgabe der axialen Länge der Sackbohrung (10) des Anschlusselementes ausgebildet ist.

## Claims

1. A pipe connection device for connecting pipes (1), in particular vehicle pipes, wherein a pipe (1) and a connection element are provided with a connection surface (6), wherein a face element formed as a flanged edge (2) is connected at least at one end of said pipe (1), said face element is equipped with a face-side sealing surface (3),
wherein a fitting (5) surrounding said pipe (1) is provided, of which said fitting (5) presses said flanged edge (2) with its face-side sealing surface (3) on said connection surface (6) of the connection element,
wherein between said fitting (5) and flanged edge (2) at least a separate pressure element (13) that fully surrounds said pipe (1) is provided, which lies on the back side of the flanged edge,
wherein said fitting (5) is a screw fitting and, wherein, when establishing a screw connection of said fitting (5), the face-side of said fitting (5) acts via said pressure element (13) on the face element of said pipe (1),
**characterized in that**
the friction coefficient µ1 of the contact between said sealing surface (3) and connection surface (6) is greater than the friction coefficient µ2 of the contact of pressure element (13) and flanged edge (2) and is greater than the friction coefficient µ3 of the contact of said fitting (5) and pressure element (13),
said pressure element (13) is pressed by means of positive closure with an end form tool on said pipe (1),
and said pressure element (13) surrounds said pipe (1) at least through a part of the axial length of said pressure element (13) by a positive-closure means.

2. The pipe connection device according to Claim 1, wherein the fitting (5) features an external thread (9) and can be screwed into a blind hole (10) of the connection element with a complementary internal thread (11).

3. The pipe connection device according to one of Claim 1 or 2, wherein the axial length of the pressure element (13) is formed based on the axial length of the blind hole (10) of the connection element.

## Revendications

1. Dispositif de raccordement de tuyaux pour le raccordement de tuyaux (1), notamment de tuyaux de véhicules, un tuyau (1) et un élément de raccordement muni d'une surface de raccordement étant ménagés, un élément frontal exécuté en tant que collet étant raccordé à au moins une extrémité du tuyau (1), lequel élément frontal est équipé d'une surface d'étanchéité (3) côté frontal,
un raccord (5) entourant le tuyau (1) étant ménagé, lequel raccord (5) presse le collet sur la surface de raccordement (6) de l'élément de raccordement avec sa surface d'étanchéité (3) côté frontal,
au moins un élément de pression (13) séparé et entourant complètement le tuyau (1) étant ménagé entre le raccord (5) et le collet (2), lequel élément de pression est adjacent au dos du collet,
le raccord (5) étant un raccord à vis et la face du raccord (5) agissant sur l'élément frontal du tuyau (1) par l'intermédiaire de l'élément de pression (13) lors de la fabrication d'un raccord à vis,
**caractérisé en ce que**
le coefficient de friction µ1 du contact entre la surface d'étanchéité (3) et la surface de raccordement (6) est supérieur au coefficient de friction µ2 du contact de l'élément de pression (13) et du collet (2) et supérieur au coefficient de friction µ3 du contact du raccord (5) et de l'élément de pression (13),
**en ce que** l'élément de pression (13) est pressé sur le tuyau (1) de manière solidaire à l'aide d'un outil pour pièce finie et
**en ce que** l'élément de pression (13) entoure le tuyau (1) de manière solidaire tout du moins sur une partie de la longueur axiale de l'élément de pression (13).

2. Dispositif de raccordement de tuyau selon la revendication 1, le raccord (5) présentant un filetage extérieur (9) et pouvant être vissé dans un trou borgne (10) de l'élément de raccordement avec un filetage intérieur complémentaire (11).

3. Dispositif de raccordement de tuyau selon l'une quelconque des revendications 1 ou 2, la longueur axiale de l'élément de pression (13) étant exécutée suivant la longueur axiale du trou borgne (10) de l'élément de raccordement.
